# EUROPÄISCHE PATENTSCHRIFT

(11) **EP 3 669 501 B1**
(45) Veröffentlichungstag und Bekanntmachung des Hinweises auf die Patenterteilung: **04.08.2021**
(21) Anmeldenummer: 18785524.2
(22) Anmeldetag: 21.09.2018
(51) Int. Cl.: H04L 12/40, H04L 29/08, B60L 53/66

(54) **VERFAHREN ZUM BEREITSTELLEN VON DATENPAKETEN AUS EINEM CAN-BUS; STEUERGERÄT SOWIE SYSTEM MIT EINEM CAN-BUS**
METHOD FOR PROVIDING DATA PACKETS FROM A CAN BUS, CONTROL DEVICE AND SYSTEM HAVING A CAN BUS
PROCÉDÉ DE PRÉPARATION DE PAQUETS DE DONNÉES À PARTIR D'UN BUS CAN ; APPAREIL DE COMMANDE ET SYSTÈME POURVU D'UN BUS CAN

(30) Priorität: 22.09.2017 DE 102017216833
(43) Veröffentlichungstag der Anmeldung: 24.06.2020
(73) Patentinhaber: Siemens Aktiengesellschaft, 80333 München (DE)
(72) Erfinder: BODE, Sebastian, 59229 Ahlen (DE); KOVATSCH, Matthias, 80336 München (DE)
(86) Internationale Anmeldenummer: PCT/EP2018/075598
(87) Internationale Veröffentlichungsnummer: WO 2019/057889

(56) Entgegenhaltungen:
- EP-A1- 2 525 312
- WO-A1-97/26750
- CN-A- 106 230 648
- DE-A1-102016 108 189

## Beschreibung

Die Erfindung betrifft ein Verfahren zum Bereitstellen von Datenpaketen aus einem CAN-Bus, beispielsweise einer Ladestation für ein Kraftfahrzeug. Ein zweiter Aspekt der Erfindung betrifft ein Steuergerät zum Bereitstellen von Datenpaketen aus einem CAN-Bus. Ein dritter Aspekt der Erfindung betrifft ein System zum Bereitstellen von Datenpaketen aus einem CAN-Bus.

Ein CAN-Bus findet durch zunehmende Vernetzung technischer Systeme auch außerhalb seiner klassischen Verwendung im Kraftfahrzeug immer häufiger Verwendung. Dabei kann der CAN-Bus für die Vernetzung einzelner Komponenten beziehungsweise Module innerhalb eines technischen Systems genutzt werden und Ethernet oder darauf aufbauende Netzwerktechnologien zur Anbindung des technischen Systems nach außen hin, beispielsweise zu einem Backend, ins Internet und/oder zu einer Servereinrichtung. Die einzelnen Komponenten des technischen Systems werden dabei oft von unterschiedlichen Herstellern jeweils für eine Vielzahl von Einsatzzwecken gefertigt. Dem Hersteller des technischen Systems fällt dann die Aufgabe zu, aus geeigneten Komponenten das technische System zu entwickeln, aufzubauen und/oder zu warten. Eine zunehmende Anzahl solcher technischer Systeme wird dabei nicht auf einem Werkgelände eines Betreibers des technischen Systems sondern in einem öffentlichen Raum betrieben. Beispiele hierfür sind Ladestationen für Kraftfahrzeuge, welche einen elektrischen Energiespeicher aufweisen, insbesondere Elektrofahrzeuge. Dementsprechend erfolgt die Wartung der Anlage vorzugsweise über eine Schnittstelle zur Anbindung des technischen Systems nach außen hin, beispielsweise Ethernet beziehungsweise die Backendanbindung. In diesem Fall kann die Verbindung über öffentliche Netze, insbesondere das Internet, erfolgen.

Für Betrieb und Wartung des technischen Systems stellt sich somit die Herausforderung, einen Fernzugriff auf den CAN-Bus zu ermöglichen. Hierbei muss sichergestellt werden, dass die unterschiedlichen Beteiligten, beispielsweise Komponentenhersteller der Komponenten, Hersteller des technischen Systems, Betreiber des technischen Systems und/oder Nutzer des technischen Systems Zugriff auf bestimmte Daten und/oder Komponenten des technischen Systems erhalten, ohne dass dies auch für andere, unberechtigte, Teilnehmer möglich ist. Der CAN-Bus ist rein für die lokale Vernetzung innerhalb des technischen Systems konzipiert. Mit anderen Worten erfolgt durch den CAN-Bus die Vernetzung der einzelnen Komponenten des technischen Systems. Bei dem CAN-Bus handelt es sich um einen Bus, bei welchem jeder Beteiligte jede Nachricht beziehungsweise jedes versendete Datenpaket empfangen kann. Demgegenüber gibt es bei der Schnittstelle für die Backendanbindung Lösungen, Daten nur an berechtigte Beteiligte auszuliefern.

Ein Beispiel für ein solches technisches System ist eine Ladestation für ein Kraftfahrzeug, insbesondere Elektrofahrzeug, wobei die Ladestation aus zahlreichen Komponenten, beispielsweise Umrichter, Bedieneinheit, Kommunikationseinheit zur Kommunikation mit dem Kraftfahrzeug und einem Energiezähler, dem Energiezähler besteht. Jede der genannten Komponenten kann nochmals aus mehreren Teilkomponenten zusammengesetzt sein. Genutzt werden Ladestationen von Nutzern beziehungsweise Fahrern von Elektrofahrzeugen. Betrieben wird die Ladestation beispielsweise von einem Inhaber einer Autobahnraststätte. Eine Abrechnung von durch die Ladeeinheit geliefertem Strom erfolgt beispielsweise durch einen Mobildienstleister, welcher den gelieferten Strom dem Nutzer beziehungsweise Fahrer des Elektrofahrzeuges in Rechnung stellt. Lieferung und Abrechnung des gelieferten Stroms kann zusätzlich über einen lokalen Energieversorger erfolgen. Eine Wartung der Ladestation kann über einen Hersteller der Ladestation erfolgen. Die Analyse der einzelnen Komponenten der Ladestation ist beispielsweise für einen Hersteller einzelner Komponenten relevant. Mit anderen Worten liegt eine Vielzahl unterschiedlicher Beteiligter vor, für welche jeweils unterschiedliche Informationen betreffend die Ladestation relevant und abrufbar sein müssen.

Aus dem Stand der Technik bekannt ist es, sich direkt mit dem CAN-Bus zu verbinden. Hierzu ist allerdings ein physischer Zugang zum CAN-Bus und damit auch zum gesamten technischen System erforderlich. Bei technischen Systemen im öffentlichen Raum, wie beispielsweise der Ladestation, kann dabei die Anreise eines Technikers nötig sein. Eine Einschränkung des Zugriffs auf bestimmte Datenpakete aus dem CAN-Bus ist hierbei nicht möglich.

Alterativ ist es bekannt, Zugriff auf den CAN-Bus über eine Komponente des technischen Systems zu erhalten, wenn auf die Komponente anderweitig Zugriff besteht. Der anderweitige Zugriff kann beispielsweise per SSH über das Internet erfolgen. Auf diese Weise ist zwar ein Fernzugriff auf den CAN-Bus gewährleistet, allerdings erhält der Beteiligte einerseits Zugriff auf alle über den CAN-Bus gesendeten Datenpakete und andererseits Zugriff auf die betreffende Komponente. Eine Einschränkung von Zugriffsrechten ist hierbei nicht immer ohne Weiteres möglich. Außerdem kann der Zugriff von Sicherheitslücken befallen sein, die dann das gesamte technische System betreffen.

Eine dritte Möglichkeit zum Zugriff auf den CAN-Bus ist eine Wartungs-Schnittstelle, im Englischen "Management-Interface" genannt. Durch die Vielzahl unterschiedlicher Komponenten unterschiedlicher Herstellung in Verbindung mit unterschiedlichen Zugriffsrechten ist eine solche Implementierung sehr aufwändig und kostenintensiv. Zudem besteht auch hier die Gefahr von Sicherheitslücken. Weiterhin ist ein vergleichsweise hohes Maß an Rechenleistung zur Bereitstellung der Management-Schnittstelle nötig.

Die EP 1 515 496 B1 betrifft ein System zur Informationsübertragung, bei welchem ein Nutzer eine Anfrage an einen durch das System bereitgestellten Webserver richten kann und das System in Antwort auf die Anfrage entsprechende Informationen aus einem CAN-Bus bereitstellt. Dabei kann der Nutzer mittels der Anfrage auswählen, welche Informationen er abrufen möchte. Die Anfrage des Nutzers erfolgt beispielsweise über eine TCP/IP-Verbindung im http-Format.

Die US 2014 / 01 29 047 A1 betrifft ein Verfahren zur Bereitstellung eines Kraftfahrzeugkontrollsystems. Dabei wird ein Abstraktionsgerät an einen CAN-Bus eines Kraftfahrzeugs gekoppelt, wobei das Abstraktionsgerät eine Zuordnungseinheit umfasst, welche ein Datensignal von einem fahrzeugspezifischen Format in ein Format für ein mobiles Endgerät überführt. Auf diese Weise kann mittels des mobilen Endgeräts auf den CAN-Bus zugegriffen werden.

Die CN 106 230 648 beschreibt einen Controller für eine Türe, wobei der Controller ein Kommunikationsmodul zum Übermitteln gesammelter Daten an einen Backend-Server aufweist.

Die WO 97 / 267 50 offenbart einen Controller, der einerseits mit Onboard-Geräten eines Fahrzeugs als auch mit einem entfernten Standort kommunizieren kann. Hierzu wird ein HTTP-Webserver bereitgestellt. Der Webserver interpretiert eine übertragene Anfrage und bestimmt, dass bestimmte Daten, die in einem Datenspeicher gespeichert sind, durch einen Nutzer an dem entfernten Standort angefragt werden.

Es ist somit Aufgabe der vorliegenden Erfindung, eine ressourcenschonendere und dennoch sicherere Möglichkeit zum Bereitstellen von Datenpaketen aus einem CAN-Bus zu ermöglichen.

Diese Aufgabe wird erfindungsgemäß gelöst durch die Gegenstände der Patentansprüche 1, 10 und 11. Vorteilhafte Ausführungsformen mit zweckmäßigen Weiterbildungen sind Gegenstand der Unteransprüche.

Die vorliegende Erfindung stellt ein Verfahren bereit, mittels welchem das Bereitstellen von Datenpaketen zwischen zwei vollkommen inkompatiblen Datenverbindungen ermöglicht wird. Eine direkte Verbindung des CAN-Busses mit der Datenverbindung ist dabei nicht möglich. Daher können die Datenpakete aus dem CAN-Bus gesammelt und in Form der zumindest einen Webressource zur Übermittlung mittels der Datenverbindung bereitgestellt werden.

Ein erster Aspekt der Erfindung geht aus von einem Verfahren zum Bereitstellen von Datenpaketen aus einem CAN-Bus, insbesondere einer Ladestation für ein Kraftfahrzeug. Mit anderen Worten kann der CAN-Bus Teil der Ladestation sein. Bevorzugt ist der CAN-Bus dazu eingerichtet, mehrere Komponenten beziehungsweise Module der Ladestation miteinander zu verknüpfen. Der CAN-Bus kann insbesondere gemäß der ISO-Norm 11898 ausgeführt sein. Das Verfahren weist die folgenden Schritte auf:
- Erfassen der Datenpakete aus zumindest einer Komponente des CAN-Busses durch eigene Erfassungseinheit, welche Teil des CAN-Busses ist,
- Erstellen einer Webressource, welche die Datenpakete enthält, nach einer vorbestimmten Vorschrift durch eine Recheneinheit, wobei nur Datenpakete, welche nach der vorbestimmten Vorschrift verwandt sind, in der zumindest einen Webressource zusammengefasst werden, und
- Übermitteln eines Inhalts der zumindest einen Webressource von der Recheneinheit an ein Empfangsgerät über eine Datenverbindung mit einem von dem CAN-Bus unterschiedlichen Übertragungsprotokoll durch eine Kommunikationseinheit.

Beim Erfassen der Datenpakete werde diese insbesondere aus einer oder mehrerer der Komponenten erfasst, welche durch den CAN-Bus miteinander verbunden sind. Die Erfassungseinheit kann auf gleichartige Art und Weise wie die zumindest eine Komponente des CAN-Busses mit dem CAN-Bus verbunden sein. Insbesondere sind die zumindest eine Komponente des CAN-Busses sowie die Erfassungseinheit über den CAN-Bus miteinander verbunden. Alternativ kann die Erfassungseinheit Teil einer der Komponenten des CAN-Busses sein. In diesem Fall können die Datenpakete aus der Komponente des CAN-Busses, welche die Erfassungseinheit umfasst, und/oder zumindest einer weiteren Komponente des CAN-Busses erfasst werden. In einem konkreten Beispiel umfasst der CAN-Bus mehrere Komponenten, wobei die Datenpakete aus jeder der Mehrzahl an Komponenten durch die Erfassungseinheit empfangen werden. Dabei kann die Erfassungseinheit Teil einer der Komponenten des CAN-Busses sein.

Die Erfassungseinheit ist bevorzugt mit der Recheneinheit verknüpft. Durch die Recheneinheit können alle erfassten Datenpakete oder nur ausgewählte der erfassten Datenpakete auf die zumindest eine Webressource abgebildet werden. Beispielsweise wird durch die Recheneinheit eine Webressource erstellt, in welcher nur solche der Datenpakete zusammengefasst werden, welche der vorbestimmten Vorschrift entsprechen beziehungsweise nach der vorbestimmten Vorschrift ausgewählt werden. Alternativ werden mehrere Webressourcen erstellt, wobei in jeder der mehreren Webressourcen jeweils solche der Datenpakete zusammengefasst werden, welche einer jeweiligen Teilvorschrift der vorbestimmten Vorschrift entsprechen beziehungsweise nach der jeweiligen Teilvorschrift ausgewählt werden. Mit anderen Worten ist jeder der mehreren Webressourcen eine der jeweiligen Teilvorschriften zugeordnet, wobei die jeweilige Teilvorschrift vorgibt, welche der Datenpakete in der jeweiligen Webressource zusammengefasst werden.

Bei der Webressource im Sinne der vorliegenden Erfindung handelt es sich insbesondere um ein Objekt, auf welches zugegriffen werden kann. Insbesondere weist die zumindest eine Webressource eine eindeutige Adresse, insbesondere Webadresse und/oder URL (Uniform Ressource Locator, englisch für einheitlicher Ressourcenanzeiger), auf. Durch Abrufen der Adresse der zumindest einen Webressource kann die Webressource beziehungsweise deren Inhalt aufgerufen beziehungsweise abgerufen werden. Erfindungsgemäß werden mehrere Webressourcen erstellt und jede der mehreren Webressourcen weist eine jeweilige, eindeutige Adresse auf. Das Übermitteln des Inhalts der zumindest einen Webressource erfolgt insbesondere dann, wenn die Adresse der zumindest einen Webressource durch das Empfangsgerät aufgerufen wird. Mit anderen Worten wird ermittelt, ob die zumindest eine Webressource durch das Empfangsgerät aufgerufen wird, und, wenn dies der Fall ist, der Inhalt der zumindest einen Webressource an das Empfangsgerät übermittelt. Mit anderen Worten wird die zumindest eine Webressource beziehungsweise deren Inhalt abrufbar bereitgestellt.

Mit anderen Worten sieht die erfindungsgemäße Lösung der zugrundeliegenden Aufgabe vor, dass die Datenpakete auf die zumindest eine Webressource abgebildet werden und dadurch über die Datenverbindung abrufbar bereitgestellt werden. Das Erstellen der Webressource sowie das Zusammenfassen der Datenpakete in der Webressource nach der vorbestimmten Vorschrift ist dabei besonders unkompliziert und ressourcensparend möglich. Außerdem ist eine Programmierung der Recheneinheit besonders leicht möglich, da anhand der vorbestimmten Vorschrift leicht vorgegeben werden kann, welche der Datenpakete in der Webressource zusammengefasst werden. Beim Bereitstellen der Webressource beziehungsweise beim Abrufen oder Übermitteln des Inhalts der Webressource ist insbesondere kein darüber hinausgehender Zugriff auf die Recheneinheit und/oder den CAN-Bus möglich. Auf diese Weise kann ein hohes Sicherheitsniveau gewährleistet werden.

Bei dem Empfangsgerät handelt es sich beispielsweise um eine Servereinrichtung, einen Personal Computer, ein Notebook und/oder ein mobiles Endgerät, beispielsweise ein Tablet oder ein Smartphone. Bei der Kommunikationseinheit kann es sich beispielsweise um ein Netzwerkmodul, ein Modem oder ein Mobilfunkmodul handeln.

Eine Weiterbildung sieht vor, dass das Übermitteln des Inhalts der zumindest einen Webressource an das Empfangsgerät mittels eines HTTP (Hypertext Transfer Protocol)-Protokolls oder eines CoAP (Constrained Application Protocol)-Protokolls als dem Übertragungsprotokoll erfolgt. Bei den genannten Protokollen handelt es sich um beispielhafte Protokolle, mittels welcher die Webressource beziehungsweise den Inhalt besonders vorteilhaft an das Empfangsgerät übermittelt werden kann. Insbesondere kann die Webressource über das CoAP-Protokoll besonders ressourcenschonend bereitgestellt und übermittelt werden. Die Datenverbindung kann beispielsweise über Ethernet, WLAN, einen Internetzugang, kabelgebunden oder per Mobilfunk, bereitgestellt sein.

Eine Weiterbildung sieht vor, dass gemäß der vorbestimmten Vorschrift beim Erstellen der zumindest einen Webressource eine Interpretation eines Inhalts der Datenpakete erfolgt und anhand des Inhalts ermittelt wird, ob die Datenpakete verwandt sind. Beispielsweise können die Datenpakete beim Interpretieren auf vorbestimmte Datenmuster untersucht werden. Insbesondere können dann solche der Datenpakete, welche alle ein gemeinsames vorbestimmtes Datenmuster aufweisen, in der zumindest einen Webressource zusammengefasst werden. In diesem Fall können durch Abrufen der zumindest einen Webressource alle Datenpakete, welche das gemeinsame vorbestimmte Datenmuster enthalten, abgerufen werden.

Eine Weiterbildung sieht vor, dass die vorbestimmte Vorschrift zumindest teilweise durch ein Programmmodul bereitgestellt ist, welches aus dem Empfangsgerät empfangen wird. Durch das Programmmodul wird insbesondere vorgegeben, nach welchen Kriterien die Datenpakete in der zumindest einen Webressource zusammengefasst werden. Alternativ oder zusätzlich kann durch Programmmodul vorgegeben werden, auf welche Art und Weise die Interpretation des Inhalts der Datenpakete erfolgt. Beispielsweise kann durch das Programmmodul das vorbestimmte Datenmuster bereitgestellt werden, auf welches die Datenpakete hin untersucht werden. Dadurch, dass das Programmmodul aus dem Empfangsgerät empfangen wird, kann das Bereitstellen der Datenpakete aus dem CAN-Bus zumindest teilweise durch das Empfangsgerät gesteuert werden. Dabei wird das Programmmodul insbesondere über die Datenverbindung mit dem von dem CAN-Bus unterschiedlichen Übertragungsprotokoll aus dem Empfangsgerät empfangen.

Insbesondere ist vorgesehen, dass die Recheneinheit durch das Empfangen des Programmmoduls dazu eingerichtet wird, die Datenpakete auf eine an das Empfangsgerät, an einen Anwendungsfall und/oder an die zumindest eine Komponente des CAN-Busses angepasste Weise zu interpretieren. Beispielsweise kann durch das Programmmodul vorgegeben werden, dass die Datenpakete auf eine Art und Weise bereitgestellt werden, die für unterschiedliche Beteiligte angepasst ist. Unterschiedliche Beteiligte können beispielsweise wie einleitend auch schon beschrieben, Hersteller von Komponenten eines technischen Systems, welches den CAN-Bus aufweist, Hersteller des technischen Systems, Betreiber des technischen Systems oder ein Kunde des technischen Systems sein. Bei dem technischen System handelt es sich dabei insbesondere um die Ladestation.

Eine Weiterbildung sieht vor, dass das Übermitteln des Inhalts der zumindest einen Webressource an das Empfangsgerät erfolgt, ohne dem Empfangsgerät darüber hinausgehenden Zugriff auf die Recheneinheit und/oder den CAN-Bus zu gewähren. Mit anderen Worten kann vorgesehen sein, dass ein Zugriff auf den CAN-Bus und/oder die Recheneinheit nur im Rahmen des Abrufens beziehungsweise Übermittelns der Webressource ermöglicht wird. Zusätzlich kann je nach Ausführungsform vorgesehen sein, dass dem Empfangsgerät ein Zugriff auf die Recheneinheit dahingehend gewährt wird, dass das Empfangen des Programmmoduls aus dem Empfangsgerät möglich ist. Auf diese Weise kann verhindert werden, dass der Nutzer des Empfangsgeräts Zugriff auf die Recheneinheit und/oder den CAN-Bus erhält. Das Auftreten von Sicherheitslücken beim Gewähren des Zugriffs auf die Recheneinheit und/oder den CAN-Bus kann hierdurch wirkungsvoll unterbunden werden. Außerdem kann sichergestellt werden, dass nur diejenigen der Datenpakete an das Empfangsgerät übermittelt werden, welche entsprechend der vorbestimmten Vorschrift ausgewählt werden.

Insbesondere kann durch die vorbestimmte Vorschrift eine Zugriffskontrolle auf die Datenpakete bereitgestellt werden. Vorzugsweise ist vorgesehen, dass in der zumindest einen Webressource nur solche Datenpakete zusammengefasst werden, für welche das Empfangsgerät die Berechtigung zum Empfang aufweist. Mit anderen Worten werden diejenigen der Datenpakete, für welche das Empfangsgerät keine Berechtigung zum Empfang aufweist, nicht in der Webressource zusammengefasst. Auf diese Weise kann anhand der vorbestimmten Vorschrift ausgewählt werden, welche der Datenpakete auf das Empfangsgerät übertragen werden.

In einem Beispiel umfassen die Datenpakete eine jeweilige Kennung. Gemäß der vorbestimmten Vorschrift können dann genau solche Datenpakete, welche dieselbe Kennung aufweisen, in der zumindest einen Webressource zusammengefasst werden. Beispielsweise werden Datenpakete gleicher Kennung in einer jeweiligen Webressource zusammengefasst. Bei der Kennung kann es sich beispielsweise um eine CAN-ID handeln, welche Teil eines jeden der Datenpakete ist. In einem konkreten Beispiel wird für jede in den Datenpaketen auftretende CAN-ID eine jeweilige Webressource erstellt. In jeder der Webressourcen werden dann genau die Datenpakete zusammengefasst, welche die Kennung beziehungsweise die CAN-ID aufweisen, welche der Webressource zugeordnet ist.

Alternativ oder zusätzlich können die Datenpakete einen jeweiligen Informationstyp aufweisen. Beispielsweise ist der Informationstyp der Datenpakete zumindest teilweise der eines Bereitschaftssignals. Gemäß der vorbestimmten Vorschrift können dann genau die Datenpakete, welche denselben Informationstyp aufweisen, in der zumindest einen Webressource zusammengefasst werden. In einem konkreten Beispiel werden alle Datenpakete, welche ein Bereitschaftssignal sind, in einer Webressource zusammengefasst. Der Informationstyp kann dabei aus einer Information, welche Teil des Datenpakets ist, ermittelt werden und/oder durch die Interpretation der Datenpakete ermittelt werden. Im Falle der Ermittlung des Informationstyps durch Interpretation, kann der Informationstyp entsprechend Regeln aus dem Programmmodul ermittelt werden.

Ein zweiter Aspekt der Erfindung betrifft ein Steuergerät zum Bereitstellen von Datenpaketen aus einem CAN-Bus, insbesondere einer Ladestation für ein Kraftfahrzeug. Der CAN-Bus kann dabei durch die ISO-Norm 11898 standardisiert sein. Das Steuergerät weist eine Erfassungseinheit, welche an dem CAN-Bus anschließbar ist, zum Erfassen der Datenpakete aus zumindest einer Komponente des CAN-Busses auf. Zusätzlich weist das Steuergerät eine Recheneinheit zum Erstellen zumindest einer Webressource, welche die Datenpakete enthält, nach einer vorbestimmten Vorschrift, wobei nur Datenpakete, welche nach der vorbestimmten Vorschrift verwandt sind, in einer jeweiligen Webressource zusammengefasst sind, auf. Außerdem umfasst das Steuergerät eine Kommunikationseinheit zum Übermitteln eines Inhalts der zumindest einen Webressource von der Recheneinheit an ein Empfangsgerät über eine Datenverbindung mit einem von dem CAN-Bus unterschiedlichen Übertragungsprotokoll. Mit anderen Worten weicht das Übertragungsprotokoll von der ISO-Norm 11898 ab.

Ein weiterer Aspekt der Erfindung betrifft ein System zum Bereitstellen von Datenpaketen mit einem Steuergerät der oben genannten Art, sowie einen CAN-Bus, welcher eine Komponente aufweist, welche eingerichtet ist, die Datenpakete an das Steuergerät zu übermitteln, und mit einem Empfangsgerät zum Abrufen der Webressource aus dem Steuergerät. Der CAN-Bus ist insbesondere Teil einer Ladestation für ein Kraftfahrzeug, vorzugsweise ein Elektrofahrzeug. Insbesondere verbindet der CAN-Bus unterschiedliche Module der Ladestation miteinander. Vorteilhafte Ausführungsformen und zweckmäßige Weiterbildungen des erfindungsgemäßen Verfahrens bilden analog auch das erfindungsgemäße System sowie das erfindungsgemäße Steuergerät weiter. Aus diesem Grund sind die Merkmale des erfindungsgemäßen Steuergeräts und des erfindungsgemäßen Systems, welche bereits in Verbindung mit dem erfindungsgemäßen Verfahren beschrieben wurden, hier nicht erneut genannt.

Weitere Merkmale und Vorteile sind der folgenden Beschreibung anhand der beigefügten Figuren zu entnehmen. In den Figuren bezeichnen gleiche Bezugszeichen gleiche Merkmale und Funktionen. Die Ausführungsbeispiele dienen lediglich der Erläuterung der Erfindung und sollen diese nicht beschränken.

Es zeigen:
- FIG 1: ein Blockdiagramm eines Systems zum Bereitstellen von Datenpaketen aus Komponenten, welche mittels eines CAN-Busses verbunden sind; und
- FIG 2: ein Beispiel für die Verteilung der Datenpakete auf mehrere Webressourcen.

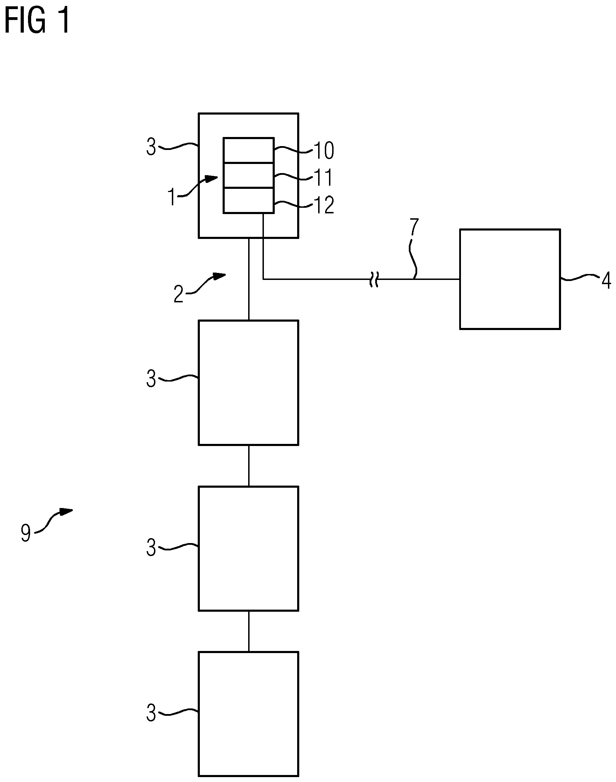

FIG 1 zeigt ein System 9 mit einem CAN-Bus 2, einem Steuergerät 1 und einem Empfangsgerät 4. Das Steuergerät 1 ist dazu eingerichtet, Datenpakete 5 aus zumindest einer Komponente 3 des CAN-Busses 2 zu erfassen. Hierzu weist das Steuergerät 1 eine Erfassungseinheit 10 auf, welcher Teil des CAN-Busses 2 ist. Mit anderen Worten ist die Erfassungseinheit 10 an dem CAN-Bus 2 angeschlossen.

Die Erfassungseinheit 10 erfasst die Datenpakete 5 aus dem CAN-Bus 2. Anschließend stellt die Erfassungseinheit 10 die Datenpakete 5 einer Recheneinheit 11 des Steuergeräts 1 bereit. Die Recheneinheit 11 erstellt Webressourcen 6, in welchen die Datenpakete 5 zusammengefasst werden. Jede der Webressourcen 6 bildet dabei ein eindeutig definiertes logisches Objekt, welches durch eine Kommunikationseinheit 12 über eine Datenverbindung 7 von dem Empfangsgerät 4 aufrufbar ist. Insbesondere ist jede der Webressourcen 6 mittels einer jeweiligen eindeutigen Adresse durch das Empfangsgerät 4 aufrufbar. Bei der Adresse handelt es sich insbesondere um eine URL (Uniform Ressource Locator, englisch für einheitlicher Ressourcenanzeiger).

Fragt das Empfangsgerät 4 eine der Webressourcen 6 von dem Steuergerät 1 an, so wird der Inhalt der angefragten Webressource 6 durch die Kommunikationseinheit 12 von der Recheneinheit 11 an das Empfangsgerät 4 übermittelt. Das Übermitteln der angefragten Webressource 6 beziehungsweise deren Inhalt erfolgt über die Datenverbindung 7, insbesondere mit einem von dem CAN-Bus 2 unterschiedlichen Übertragungsprotokoll. Insbesondere erfolgt das Übermitteln mittels der HTTP (Hypertext Transfer Protocol)-Protokolls oder eines CoAP (Constrained Application Protocol)-Protokolls als das Übertragungsprotokoll.

Das Empfangsgerät 4 kann als Personal Computer, insbesondere als Laptop oder Desktoprechner, als Servereinrichtung oder als mobiles Endgerät, beispielsweise als Smartphone oder als Tablet Computer, ausgeführt sein. Im Falle eines als Servereinrichtung ausgebildeten Empfangsgeräts 4 kann vorgesehen sein, dass die Servereinrichtung die Webressourcen 6 regelmäßig abruft. Auf diese Weise ist eine fortwährende Überprüfung eines Betriebszustands des technischen Systems durch die Servereinrichtung möglich.

Durch den CAN-Bus 2 sind mehrere Komponenten 3 miteinander verbunden. Dabei sind die Komponenten 3 durch den CAN-Bus 2 zum Austausch der Datenpakete 5 befähigt. Insbesondere ist jede der Komponenten 3 zum Senden und Empfangen von Datenpaketen 5 über den CAN-Bus 2 ausgebildet. Der CAN-Bus ist insbesondere gemäß der ISO-Norm 11898 ausgeführt. Vorliegend ist das Steuergerät 1 Teil einer der Komponenten 3. In anderen Ausführungsformen kann das Steuergerät 1 unabhängig von den Komponenten 3 des CAN-Busses 2 an dem CAN-Bus 2 angeschlossen sein. Die Komponenten 3 sowie der CAN-Bus 2 kann Teil einer Ladestation für ein Kraftfahrzeug, insbesondere ein Elektrofahrzeug sein. Die Komponenten 3 des CAN-Busses 2 können dann durch unterschiedliche Module der Ladestation gebildet sein.

Beispielsweise ist jeweils eine der Komponenten 3 als Umrichter, Bedieneinheit, Kommunikationseinheit für die Kommunikation zwischen Kraftfahrzeug und einem Energiezähler, und Energiezähler ausgeführt. Die Ladestation ist ein konkretes Beispiel für ein technisches System. Im Allgemeinen können die Komponenten 3 sowie der CAN-Bus 2 demnach Teil eines beliebigen technischen Systems sein. Im Allgemeinen bilden die Komponenten 3 Module des technischen Systems, welche mittels des CAN-Busses 2 miteinander kommunizieren können.

Um eine Fernwartung des technischen Systems, der Ladestation, des CAN-Busses 2 und/oder einer der Komponenten 3 zu ermöglichen, ist vorgesehen, dass das Steuergerät 1 die Bereitstellung der Datenpakete 5 über die Datenverbindung 7 ermöglicht. Die Datenverbindung 7 kann beispielsweise über das Internet, ein Mobilfunkmodul, Ethernet oder eine beliebige andere Datenverbindung, welche eine hohe Reichweite ermöglicht, bereitgestellt sein. Demgegenüber ist der CAN-Bus 2 nur zur lokalen Übertragung der Datenpakete 5 innerhalb des technischen Systems ausgebildet. Ein Herausführen der Datenpakete 5 aus dem CAN-Bus 2 zur Ermöglichung der Fernwartung ist somit nicht ohne Weiteres möglich.

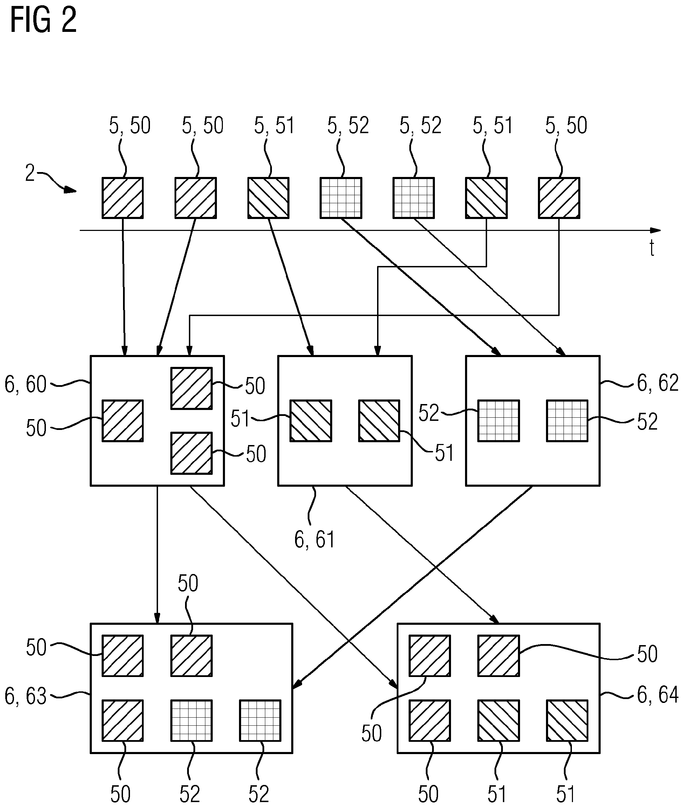

Fig. 2 zeigt einen zeitlichen Verlauf entlang einer Zeitachse t für die Datenpakete 5, welche über den CAN-Bus 2 gesendet werden. Im vorliegenden Beispiel werden drei unterschiedliche Arten an Datenpaketen 50, 51, 52 unterschieden. Beispielsweise weisen die Datenpakete 50, 51, 52 jeweils unterschiedliche Kennungen, sogenannte CAN-IDs, auf. Gemäß einer vorbestimmten Vorschrift werden in einer jeweiligen Webressource 60, 61, 62 jeweils Datenpakete 50, 51, 52 gleicher Kennung zusammengefasst. Gemäß Fig. 2 werden in der Webressource 60 die Datenpakete 50, in der Webressource 6 die Datenpakete 51 sowie in der Webressource 62 die Datenpakete 52 zusammengefasst. Beispielsweise handelt es sich bei den Datenpaketen 50 um Bereitschaftssignale einer ersten der Komponenten 3. Beispielsweise handelt es sich bei den Datenpaketen 62 um Bereitschaftssignale einer zweiten der Komponenten 3. Beispielsweise handelt es sich bei den Datenpaketen 51 um Nutzdaten der ersten der Komponenten 3. Mit anderen Worten werden die Datenpakete 50 und die Datenpakete 51 aus derselben der Komponenten 3 empfangen. Bei den Datenpaketen 50 und den Datenpaketen 52 handelt es sich vorliegend um Datenpakete 5 gleichen Informationstyps, vorliegend um Bereitschaftssignale. Mit anderen Worten ist der Informationstyp der Datenpakete 50, 52 der eines Bereitschaftssignals. Das Bereitschaftssignal kann auch als "Heartbeat" bezeichnet werden und kann in regelmäßigen oder periodischen Abständen durch eine der Komponenten 3 gesendet werden, um die Einsatzbereitschaft der Komponente 3 anzuzeigen.

In den Webressourcen 60, 61, 62 werden die Datenpakete 50, 51, 52 roh zusammengefasst. Roh bedeutet in diesem Kontext, dass keine Interpretation des Inhalts der Datenpakete 50, 51, 52 für die Verteilung der Datenpakete 50, 51, 52 auf die Webressourcen 60, 61, 62 erfolgt. Die Datenpakete 50, 51, 52 werden allein aufgrund ihrer Kennung, insbesondere ihrer CAN-ID, auf die Webressourcen 60, 61, 62 aufgeteilt. Im konkreten Beispiel tragen die Datenpakete 50 eine erste Kennung, die Datenpakete 51 eine zweite Kennung und die Datenpakete 52 eine dritte Kennung. Gemäß der vorbestimmten Vorschrift werden in der Webressource 60 alle Datenpakete 50, welche die erste Kennung tragen, zusammengefasst. Gemäß der vorbestimmten Vorschrift werden in der Webressource 61 alle Datenpakete 51 zusammengefasst, welche die zweite Kennung tragen. Entsprechend der vorbestimmten Vorschrift werden in der Webressource 62 alle Datenpakete 52 zusammengefasst, welche die dritte Kennung tragen. Somit können durch das Empfangsgerät 4 die Datenpakete 5 sortiert nach ihrer Kennung abgerufen werden.

In den Webressourcen 63, 64 werden die Datenpakete 5 interpretiert zusammengefasst. Hierzu müssen die Datenpakete 5 zunächst interpretiert werden. Beispielsweise erfolgt eine Interpretation eines Inhalts der Datenpakete 5. Alternativ oder zusätzlich kann eine Interpretation des jeweiligen Informationstyps der Datenpakete 5 erfolgen. Im vorliegenden Beispiel werden in der Webressource 63 die Datenpakete 50 sowie die Datenpakete 52 zusammengefasst, da die Datenpakete 50 und die Datenpakete 52 denselben Informationstyp, nämlich den eines Bereitschaftssignals, aufweisen. In der Webressource 64 werden die Datenpakete 50 sowie die Datenpakete 51 zusammengefasst, da sowohl die Datenpakete 50 als auch die Datenpakete 51 aus derselben der Komponenten 3 empfangen werden.

Wie durch die Zeitachse t dargestellt ist, werden die Datenpakete 5 nacheinander über den CAN-Bus 2 empfangen. In den Webressourcen 6 werden die Datenpakete 5 jedoch dauerhaft oder für eine vorbestimmte Zeitspanne gespeichert. Um den zeitlichen Verlauf der Datenpakete 5 auf dem CAN-Bus 2 auch in den Webressourcen 6 zu berücksichtigen, kann vorgesehen sein, jedem der Datenpakete 5 beim Abspeichern in der Webressource 6 einen Zeitstempel zuzuordnen. Mit anderen Worten werden die Datenpakete 5 zusammen mit einem virtuellen Zeitstempel in der Webressource 6 gespeichert. Der virtuelle Zeitstempel kann angeben, zu welcher Zeit das jeweilige Datenpaket 5 aus dem CAN-Bus 2 empfangen wurde.

Zur Verbesserung der Interpretation der Datenpakete 5 kann vorgesehen sein, dass das Steuergerät 1 beziehungsweise die Kommunikationseinheit 12 dazu ausgebildet ist, ein Programmmodul aus dem Empfangsgerät 4 zu empfangen. Das Programmmodul kann beispielsweise vorgeben, auf welche Art und Weise die Datenpakete 5 zu interpretieren sind. Vorliegend wird durch das Programmmodul vorgegeben, dass die Datenpakete 50 mit der ersten Kennung sowie die Datenpakete 52 mit der dritten Kennung jeweils als Bereitschaftssignale zu interpretieren sind. Außerdem wird vorliegend durch das Programmmodul vorgegeben, dass die Datenpakete 50 mit der ersten Kennung und die Datenpakete 51 mit der zweiten Kennung jeweils aus der ersten der Komponenten 3 stammen. Mit anderen Worten gibt das vorliegende Programmmodul vor, wie die Datenpakete 5 anhand ihrer Kennung zu interpretieren sind.

Da alle Datenpakete 5 von dem CAN-Bus 2 auf die Webressourcen 6 abgebildet werden, kann eine Zugriffskontrolle auf die Datenpakete 5 gewährleistet werden. Beispielsweise werden nur diejenigen der Datenpakete 5 auf die Webressourcen 6 abgebildet, auf welche ein Nutzer des Empfangsgeräts 4 Zugriff bekommen soll. Auf diese Weise ist eine Zugriffskontrolle beziehungsweise eine feingranulare Gewährung des Zugriffs auf einzelne physische Komponenten, die Komponenten 3 oder innerhalb eines vorgegebenen Zeitfensters möglich. Wesentlich ist dabei dass die Abbildung beziehungsweise das Zusammenfassen der Datenpakete 5 in den Webressourcen 6 automatisch erfolgt.

Durch die Programmmodule ist eine zielgerichtete Auswertung und anpassbare Interpretation der Datenpakete 5 möglich. Auf diese Weise können Datenpakete 5 auf jeweils anwendungsfallbezogene Weise interpretiert beziehungsweise dargestellt werden. Beispielsweise können Hersteller einzelner der Komponenten 3, eine Wartungsfirma des technischen Systems sowie ein Hersteller des technischen Systems jeweils eigene Programmmodule auf dem Steuergerät 1 abgelegen beziehungsweise installieren.

Ein weiteres Merkmal ist die Zustandslosigkeit eins Zugriffs auf die Datenpakete 5 über die Webressourcen 6. Hierdurch ist eine Verbindung über die Datenverbindung 7 zu dem Steuergerät 1 jederzeit möglich. Anfragen nach Webressourcen oder Datenpaketen 5 können jederzeit gestellt werden, ohne vom Ergebnis einer vorherigen Anfrage abhängig zu sein. Somit sind die Anforderungen an die Zuverlässigkeit der Datenverbindung 7 besonders gering. Insbesondere sind die Anforderungen an die Zuverlässigkeit der Verbindung geringer als beispielsweise im Falle einer SSH-Verbindung.

Insbesondere ist durch das Empfangsgerät 4 kein über das Abrufen der Webressource 6 hinausgehender Zugriff auf den CAN-Bus 2 und/oder die Recheneinheit 11 möglich. Alternativ ist durch das Empfangsgerät 4 kein auf das Abrufen der Webressourcen 6 und das Bereitstellen des Programmmoduls hinausgehender Zugriff auf die Recheneinheit 11 und/oder den CAN-Bus 2 möglich. Mit anderen Worten ermöglicht das Steuergerät ausschließlich das Abrufen der Webressourcen 6 und optional das Bereitstellen des Programmmoduls und blockt alle darüber hinausgehenden Zugriffe ab. Auf diese Weise kann die Recheneinheit 11 beziehungsweise der CAN-Bus 2 sowie das technische System vor unberechtigtem Zugriff geschützt werden. Alternativ oder zusätzlich kann der CAN-Bus 2, das technische System und/oder das Steuergerät 1 durch im Internet übliche Sicherheitsmechanismen geschützt werden. Beispiele hierfür sind TLS (Transport Layer Security, englisch für Transportschichtsicherheit)-Zertifikate oder Tokens.

## Patentansprüche

1. Verfahren zum Bereitstellen von Datenpaketen (5) aus einem CAN-Bus (2), insbesondere einer Ladestation für ein Kraftfahrzeug, mit den Schritten:
- Erfassen der Datenpakete (5) aus zumindest einer Komponente (3) des CAN-Busses (2) durch eine Erfassungseinheit (10), welche Teil des CAN-Busses (2) ist,
- Erstellen mehrerer Webressourcen (6), welche die Datenpakete (5) enthalten, nach einer vorbestimmten Vorschrift durch eine Recheneinheit (11), wobei nur Datenpakete (5), welche nach der vorbestimmten Vorschrift verwandt sind, in den Webressourcen (6) zusammengefasst werden, wobei jede der mehreren Webressourcen eine jeweilige, eindeutige Adresse aufweist,
- Übermitteln eines Inhalts der Webressourcen (6) von der Recheneinheit (11) an ein Empfangsgerät (4) über eine Datenverbindung (7) mit einem von dem CAN-Bus (2) unterschiedlichen Übertragungsprotokoll durch eine Kommunikationseinheit (12) .

2. Verfahren nach Anspruch 1, **dadurch gekennzeichnet, dass** das Übermitteln des Inhalts der Webressourcen (6) an das Empfangsgerät (4) mittels eines HTTP (Hypertext Transfer Protocol)-Protokolls oder eines CoAP (Constrained Application Protocol)-Protokolls als dem Übertragungsprotokoll erfolgt.

3. Verfahren nach Anspruch 1 oder 2, **dadurch gekennzeichnet, dass** gemäß der vorbestimmten Vorschrift beim Erstellen der Webressourcen (6) eine Interpretation eines Inhalts der Datenpakete (5) erfolgt und anhand des Inhalts ermittelt wird, ob die Datenpakete (5) verwandt sind.

4. Verfahren nach einem der vorhergehenden Ansprüche, **dadurch gekennzeichnet, dass** die vorbestimmte Vorschrift zumindest teilweise durch ein Programmmodul bereitgestellt ist, welches aus dem Empfangsgerät (4) empfangen wird.

5. Verfahren nach den Ansprüche 3 und 4, **dadurch gekennzeichnet, dass** die Recheneinheit (11) durch das Empfangen des Programmmoduls dazu eingerichtet wird, die Datenpakete (5) auf eine an das Empfangsgerät (4), an einen Anwendungsfall und/oder an die zumindest eine Komponente (3) des CAN-Busses (2) angepasste Weise zu interpretieren.

6. Verfahren nach einem der vorhergehenden Ansprüche, **dadurch gekennzeichnet, dass** das Übermitteln des Inhalts der Webressourcen (6) an das Empfangsgerät (4) erfolgt, ohne dem Empfangsgerät (4) darüber hinausgehenden Zugriff auf die Recheneinheit (11) und/oder den CAN-Bus (2) zu gewähren.

7. Verfahren nach einem der vorhergehenden Ansprüche, **dadurch gekennzeichnet, dass** in den Webressourcen (6) nur solche Datenpakete (5) zusammengefasst werden, für welche das Empfangsgerät (4) die Berechtigung zum Empfang aufweist.

8. Verfahren nach einem der vorhergehenden Ansprüche, **dadurch gekennzeichnet, dass** die Datenpakete (5) eine jeweilige Kennung umfassen und gemäß der vorbestimmten Vorschrift genau solche Datenpakete (5) gleicher Kennung in den Webressourcen (6) zusammengefasst werden.

9. Verfahren nach einem der vorhergehenden Ansprüche, **dadurch gekennzeichnet, dass** die Datenpakete (5) einen jeweiligen Informationstyp, insbesondere ein Bereitschaftssignal, aufweisen und gemäß der vorbestimmten Vorschrift genau Datenpakete (5) gleichen Informationstyps und/oder des Bereitschaftssignals in den Webressourcen (6) zusammengefasst werden.

10. Steuergerät (1) zum Bereitstellen von Datenpaketen (5) aus einem CAN-Bus (2), insbesondere einer Ladestation für ein Kraftfahrzeug, mit
- einer Erfassungseinheit (10), welche an dem CAN-Bus (2) anschließbar ist, zum Erfassen der Datenpakete (5) aus zumindest einer Komponente (3) des CAN-Busses (2),
- einer Recheneinheit (11) zum Erstellen mehrerer Webressourcen (6), welche die Datenpakete (5) enthält, nach einer vorbestimmten Vorschrift, wobei nur Datenpakete (5), welche nach der vorbestimmten Vorschrift verwandt sind, in den Webressourcen (6) zusammengefasst sind, wobei jede der mehreren Webressourcen eine jeweilige, eindeutige Adresse aufweist,
- einer Kommunikationseinheit (12) zum Übermitteln eines Inhalts der Webressourcen (6) von der Recheneinheit (11) an ein Empfangsgerät (4) über eine Datenverbindung (7) mit einem von dem CAN-Bus (2) unterschiedlichem Übertragungsprotokoll.

11. System (9) zum Bereitstellen von Datenpaketen (5), mit
- einem Steuergerät (1) nach Anspruch 10,
- einem CAN-Bus (2), insbesondere einer Ladestation für ein Kraftfahrzeug, mit einer Komponente (3), welche eingerichtet ist, die Datenpakete (5) an das Steuergerät (1) zu übermitteln, und
- einem Empfangsgerät (4) zum Abrufen der Webressourcen (6) aus dem Steuergerät (5).

## Claims

1. Method for providing data packets (5) from a CAN bus (2), in particular a charging station for a motor vehicle, including the steps of:
- capturing the data packets (5) from at least one component (3) of the CAN bus (2) by means of a capture unit (10) that is part of the CAN bus (2),
- creating multiple web resources (6), which contain the data packets (5), according to a predetermined specification by means of a computing unit (11), wherein only data packets (5) that are related according to the predetermined specification are combined in the web resources (6), each of the multiple web resources having a respective, unique address,
- conveying a content of the web resources (6) from the computing unit (11) to a receiving device (4) via a data connection (7), using a transmission protocol that is different than the CAN bus (2), by means of a communication unit (12).

2. Method according to Claim 1, **characterized in that** the content of the web resources (6) is conveyed to the receiving device (4) by means of an HTTP (Hypertext Transfer Protocol) protocol or a CoAP (Constrained Application Protocol) protocol as the transmission protocol.

3. Method according to Claim 1 or 2, **characterized in that** the predetermined specification stipulates that the creating of the web resources (6) results in a content of the data packets (5) being interpreted, and the content is used to ascertain whether the data packets (5) are related.

4. Method according to one of the preceding claims, **characterized in that** the predetermined specification is provided at least in part by a program module that is received from the receiving device (4).

5. Method according to Claims 3 and 4, **characterized in that** the computing unit (11) is configured, by the receiving of the program module, to interpret the data packets (5) in a manner adapted to the receiving device (4), to an instance of application and/or to the at least one component (3) of the CAN bus (2).

6. Method according to one of the preceding claims, **characterized in that** the content of the web resources (6) is conveyed to the receiving device (4) without granting the receiving device (4) access to the computing unit (11) and/or the CAN bus (2) beyond that.

7. Method according to one of the preceding claims, **characterized in that** only such data packets (5) as the receiving device (4) has the authorization to receive are combined in the web resources (6).

8. Method according to one of the preceding claims, **characterized in that** the data packets (5) comprise a respective identifier and the predetermined specification stipulates that precisely such data packets (5) having the same identifier are combined in the web resources (6).

9. Method according to one of the preceding claims, **characterized in that** the data packets (5) have a respective information type, in particular a ready signal, and the predetermined specification stipulates that precisely data packets (5) of the same information type and/or of the ready signal are combined in the web resources (6).

10. Control device (1) for providing data packets (5) from a CAN bus (2), in particular a charging station for a motor vehicle, including
- a capture unit (10), which is connectable to the CAN bus (2), for capturing the data packets (5) from at least one component (3) of the CAN bus (2),
- a computing unit (11) for creating multiple web resources (6), which contain the data packets (5), according to a predetermined specification, wherein only data packets (5) that are related according to the predetermined specification are combined in the web resources (6), each of the multiple web resources having a respective, unique address,
- a communication unit (12) for conveying a content of the web resources (6) from the computing unit (11) to a receiving device (4) via a data connection (7), using a transmission protocol that is different than the CAN bus (2).

11. System (9) for providing data packets (5), including
- a control device (1) according to Claim 10,
- a CAN bus (2), in particular a charging station for a motor vehicle, including a component (3) that is configured to convey the data packets (5) to the control device (1), and
- a receiving device (4) for retrieving the web resources (6) from the control device (5).

## Revendications

1. Procédé de fourniture de paquets de données (5) à partir d'un bus CAN (2), et plus particulièrement d'une borne de recharge pour un véhicule, comportant les étapes :
- détection des paquets de données (5) issus d'au moins un composant (3) du bus CAN (2) par une unité de détection (10) qui fait partie du bus CAN (2),
- création de plusieurs ressources web (6), qui contiennent les paquets de données (5), par une unité de calcul (11) selon une règle prédéfinie, seuls des paquets de données (5) apparentés selon la règle prédéfinie étant regroupés dans les ressources web (6), chacune des plusieurs ressources web présentant une adresse univoque respective,
- transmission d'un contenu des ressources web (6) de l'unité de calcul (11) à un appareil de réception (4) via une liaison de données (7) avec un protocole de transmission différent du bus CAN (2) par une unité de communication (12).

2. Procédé selon la revendication 1, **caractérisé en ce que** la transmission du contenu des ressources web (6) à l'appareil de réception (4) se fait au moyen d'un protocole HTTP (Hypertext Transfer Protocol) ou d'un protocole CoAP (Constrained Application Protocol) en tant que protocole de transmission.

3. Procédé selon la revendication 1 ou 2, **caractérisé en ce qu'**a lieu, conformément à la règle prédéfinie, lors de la création des ressources web (6), une interprétation d'un contenu des paquets de données (5) et **en ce qu'**il est déterminé, à l'aide du contenu, si les paquets de données (5) sont apparentés.

4. Procédé selon l'une des revendications précédentes, **caractérisé en ce que** la règle prédéfinie est fournie au moins en partie par un module de programme qui est reçu à partir de l'appareil de réception (4).

5. Procédé selon les revendications 3 et 4, **caractérisé en ce que** l'unité de calcul (11) est configurée par la réception du module de programme pour interpréter les paquets de données (5) de manière adaptée à l'appareil de réception (4), à un cas d'application et/ou à l'au moins un composant (3) du bus CAN (2) .

6. Procédé selon l'une des revendications précédentes, **caractérisé en ce que** la transmission du contenu des ressources web (6) se fait à l'appareil de réception (4) sans donner à l'appareil de réception (4) un accès supplémentaire à l'unité de calcul (11) et/ou au bus CAN (2).

7. Procédé selon l'une des revendications précédentes, **caractérisé en ce que** ne sont regroupés, dans les ressources web (6), que des paquets de données (5) pour lesquels l'appareil de réception (4) présente le droit de réception.

8. Procédé selon l'une des revendications précédentes, **caractérisé en ce que** les paquets de données (5) comprennent un identifiant respectif et **en ce que** sont regroupés dans les ressources web (6), conformément à la règle prédéfinie, exactement des paquets de données (5) ayant le même identifiant.

9. Procédé selon l'une des revendications précédentes, **caractérisé en ce que** les paquets de données (5) présentent un type d'information respectif, et plus particulièrement un signal de disponibilité, et **en ce que** sont regroupés dans les ressources web (6), conformément à la règle prédéfinie, exactement des paquets de données (5) ayant le même type d'information et/ou de signal de disponibilité.

10. Appareil de commande (1) pour fournir des paquets de données (5) à partir d'un bus CAN (2), et plus particulièrement d'une borne de recharge pour un véhicule, comportant :
- une unité de détection (10), qui peut être raccordée au bus CAN (2), pour détecter les paquets de données (5) issus d'au moins un composant (3) du bus CAN (2),
- une unité de calcul (11), laquelle contient les paquets de données (5), pour créer plusieurs ressources web (6) selon une règle prédéfinie, seuls des paquets de données (5) qui sont apparentés selon la règle prédéfinie étant regroupés dans les ressources web (6), chacune des plusieurs ressources web présentant une adresse univoque respective,
- une unité de communication (12) pour transmettre un contenu des ressources web (6) de l'unité de calcul (11) à un appareil de réception (4) via une liaison de données (7) avec un protocole de transmission différent du bus CAN (2).

11. Système (9) de fourniture de paquets de données (5), comportant :
- un appareil de commande (1) selon la revendication 10,
- un bus CAN (2), et plus particulièrement une borne de recharge pour un véhicule, avec un composant (3) qui est configuré pour transmettre les paquets de données (5) à l'appareil de commande (1) et
- un appareil de réception (4) pour faire venir les ressources web (6) de l'appareil de commande (5).
